# EUROPEAN PATENT SPECIFICATION

(11) **EP 2 917 514 B1**
(45) Date of publication and mention of the grant of the patent: **19.06.2019**
(21) Application number: 13815005.7
(22) Date of filing: 04.10.2013
(51) Int. Cl.: F01K 23/10, F01K 23/06

(54) **A COOLING ARRANGEMENT FOR A COMBINED CYCLE INTERNAL COMBUSTION PISTON ENGINE POWER PLANT**
KÜHLANORDNUNG FÜR EIN KRAFTWERK MIT EINEM KOMBINIERTEN ZYKLUS UNTER VERWENDUNG EINES HUBKOLBEN-VERBRENNUNGSMOTORS
AGENCEMENT DE REFROIDISSEMENT POUR GROUPE MOTEUR À MOTEUR À PISTON À COMBUSTION INTERNE À CYCLE COMBINÉ

(30) Priority: 11.10.2012 FI 20126065
(43) Date of publication of application: 16.09.2015
(73) Proprietor: Wärtsilä Finland Oy, 65380 Vaasa (FI)
(72) Inventor: LINDE, Eirik, FI-65320 Vaasa (FI); MÄKELÄ, Kristian, FI-65320 Vaasa (FI); STAFFANS, Thomas, FI-65800 Mustasaari (FI)
(74) Representative: Genip Oy
(86) International application number: PCT/FI2013/050964
(87) International publication number: WO 2014/057168

(56) References cited:
- FR-A1- 2 416 340
- US-A- 5 351 487
- US-A1- 2010 146 974
- US-A1- 2010 263 380
- US-A1- 2010 313 565

## Description

### Technical field

Invention relates to a cooling arrangement for a combined cycle internal combustion piston engine power plant comprising an internal combustion piston engine and a boiler system connected to receive heat produced in the internal combustion piston engine according to preamble of claim 1.

### Background art

EP1028233 A2 discloses a combined cycle power plant, comprising at least one multi-cylinder combustion engine unit, the exhaust gases of which are fed into exhaust gas boiler producing steam. The steam is utilized in a steam turbine to produce electricity. The arrangement also comprises a steam turbine, to which an electric generator, a condenser, a heat exchanger, which may be utilized for cooling of the engine, and a feed water tank are attached.

US2010313565 A1 discloses a waste heat recovery system by which two different waste heat thermal resources that are usually derived from an internal combustion engine and are normally not exploited are used to transfer heat to an organic Rankine cycle to produce power by using two turbines.

Combined cycle power plants utilizing internal combustion engines are known as such. Such a power plant produces electricity by means of both an engine coupled generator and a steam turbine generator driven by steam produced by the heat of the exhaust gases of the engine.

In prior art combined cycle power plants there is an exhaust gas boiler arranged in connection with the exhaust gas channel of the engine. The steam generated is led to a steam turbine which is arranged to drive a generator to produce electricity. Steam used in the steam turbine at lower pressure is normally condensed by a condensing unit transferring heat to the surrounding.

It is an object of the invention to provide a cooling arrangement for a combined cycle internal combustion piston engine power plant by means of which the heat flows of the arrangement may be efficiently controlled.

### Disclosure of the Invention

Object of the invention is substantially met by a cooling arrangement for a combined cycle internal combustion piston engine power plant comprising an internal combustion piston engine and a boiler system comprising a turbine-generator set, which cooling arrangement comprises a cooling fluid circuit provided with a first heat transfer arrangement adapted to cool the fluid in the cooling fluid circuit, and a second heat transfer arrangement for receiving heat from the engine, a condenser heat transfer arrangement for condensing the steam in the boiler system and a third heat transfer arrangement for receiving heat from the engine. It is characteristic to the invention that the first heat transfer arrangement is arranged to transfer heat from the cooling fluid to the air surrounding the arrangement without mass transfer to the air and that in the cooling fluid circuit the first heat transfer arrangement, the second heat transfer arrangement, the condenser heat transfer arrangement and the third heat transfer arrangement are all connected in series.

In this manner the heat flows in a combined cycle internal combustion piston engine power plant may be efficiently controlled. The actual order or sequence of the first heat transfer arrangement, the second heat transfer arrangement, the condenser heat transfer arrangement and the third heat transfer arrangement may vary according to a specific application.

According to an embodiment of the invention the cooling fluid circuit of the heat transfer arrangement is a closed circuit.

The third heat transfer arrangement for receiving heat from the engine may be applied in practice making use of various possible ways of connecting the engine to the cooling arrangement.

According to still another embodiment of the invention the second heat transfer arrangement is arranged to transfer heat from the combustion air of the engine to the cooling fluid in the cooling fluid circuit.

According to still another embodiment of the invention the condenser heat transfer arrangement is arranged to condense the steam in the boiler system and transfer heat to the cooling fluid in the cooling fluid circuit, the condenser heat transfer arrangement being arranged downstream the second heat transfer arrangement.

According to still another embodiment of the invention the condenser heat transfer arrangement is arranged between the first and the second heat transfer arrangement in the circuit.

According to still another embodiment of the invention the third heat transfer arrangement comprises lubrication oil heat transfer unit, combustion air heat transfer unit and an engine jacket heat transfer unit connected in series in the cooling fluid circuit.

According to still another embodiment of the invention the third heat transfer arrangement comprises lubrication oil heat transfer unit, combustion air heat transfer unit and an engine jacket heat transfer unit connected parallel to the cooling fluid circuit.

According to still another embodiment of the invention the second heat transfer arrangement is provided with a temperature control system to control the heat transfer rate from the combustion air to the cooling fluid.

According to still another embodiment of the invention the third heat transfer arrangement is provided with a temperature control system to control the heat transfer rate from the combustion air, lubrication air and engine to the cooling fluid.

According to still another embodiment of the invention the cooling arrangement comprises a pre-heater heat transfer arrangement connected at its second side to the boiler system, downstream the condenser heat transfer arrangement to transfer heat from the engine to the condensate thus pre-heating the condensate. In this case the pre-heater is advantageously an engine dedicated pre-heater. Preferably the pre-heater heat transfer arrangement is arranged to transfer heat from the engine jacket cooling fluid to the condensate via by an engine jacket heat transfer unit.

According to still another embodiment of the invention the arrangement comprises a set of first heat transfer arrangements comprising more than one first heat transfer arrangements connected in parallel with each other.

According to still another embodiment of the invention the arrangement comprises a set of second heat transfer arrangements comprising more than one second heat transfer arrangements connected in parallel with each other, each of the second heat transfer arrangements arranged to receive heat from separate engine, and the arrangement comprises a set of third heat transfer arrangements comprising more than one third heat transfer arrangements connected in parallel, each of the third heat transfer arrangements arranged to receive heat from a separate engine.

According to still another embodiment of the invention the set of first heat transfer arrangements is connected via a first manifold to the set of second heat transfer unit so that a first selected number of the first heat transfer arrangements may be operated i.e. be in use and a second selected number of the second heat transfer arrangements may be operated.

According to still another embodiment of the invention the set of second heat transfer arrangements is connected to a condenser heat transfer arrangement via a second manifold so that cooling fluid heated in the second selected number of the second heat transfer arrangements may led to the condenser heat transfer arrangement.

According to still another embodiment of the invention the condenser heat transfer arrangement is connected via a third manifold to the set of third heat transfer arrangements so that cooling fluid heated in the condenser heat transfer arrangement may be led to the third selected number of the third heat transfer arrangements.

By means of the invention the steam turbine output may be maximized and plant parasitic load minimized. Additionally by means of the present invention the water consumption is minimized particularly compared to using cooling towers.

One additional benefit for this solution, compared to conventional cooling towers and air cooled condensers, is that the optimal performance is guaranteed also in extremely low temperature ambient conditions as cooling fluid may be selected suitably for the circumstances, e.g. use of anti-freeze solution is possible in the cooling circuit. Additionally the solution requires a smaller plant footprint compared to using a cooling tower and air cooled condenser solutions.

### Brief Description of Drawings

In the following, the invention will be described with reference to the accompanying exemplary, schematic drawings, in which
- Figure 1 illustrates a combined cycle internal combustion piston engine power plant according to an embodiment of the invention,
- Figure 2 illustrates a combined cycle internal combustion piston engine power plant according to another embodiment of the invention,
- Figure 3 illustrates a combined cycle internal combustion piston engine power plant according to still another embodiment of the invention,
- Figure 4 illustrates a combined cycle internal combustion piston engine power plant according to another embodiment of the invention, and,
- Figure 5 illustrates a combined cycle internal combustion piston engine power plant according to another embodiment of the invention.

### Detailed Description of Drawings

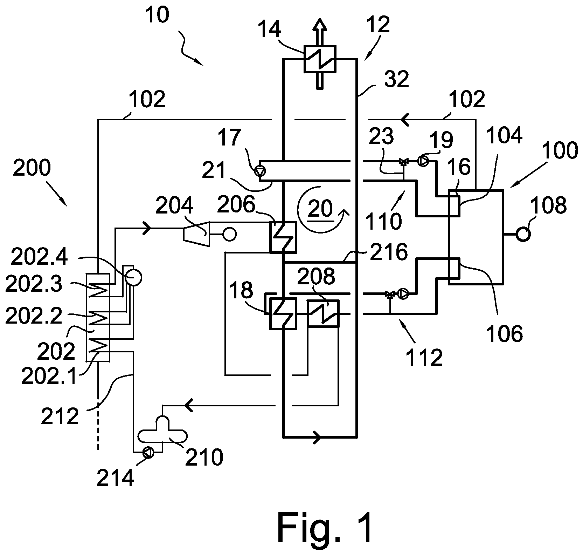

Figure 1 depicts schematically a combined cycle internal combustion piston engine power plant 10. The combined cycle power plant comprises an internal combustion engine 100 and a boiler system 200 connected to each other. An exhaust gas channel 102 is in connection with the boiler system 200 so that the exhaust gas from the engine is cooled down in the boiler and steam is produced by means of the heat in the exhaust gas.

The boiler system 200 comprises a steam production unit 202, steam turbine - generator set 204, condenser heat transfer arrangement 206, condensate pre-heater 208 and a feed water tank 210, and a piping 212 with a circulating pump 214 connecting them and forming a cycle process. The steam production unit 202 comprises e.g. one or more economizers 202.1, one or more evaporators 202.2 and one or more super heaters 202.3 and one or more steam drums 202.4 arranged in a manner known as such.

The internal combustion engine 100 may be an engine known as such. Typically such an engine needs to be provided with a system by means of which heat may be transferred away from the engine. Due to the operation of the present invention said system is divided to a lower temperature level heat transfer arrangement 104 and to a higher temperature level heat transfer arrangement 106, which are illustrated here in very schematic manner. The engine is coupled to an electric generator 108. Advantageously the lower temperature level heat transfer arrangement 104 is adapted to cool the combustion air of the engine. The higher temperature level heat transfer arrangement 106 advantageously is adapted to cool the lubrication oil, engine jacket and also partly the combustion air. The engine is mechanically coupled to an electric generator 108.

The combined cycle power plant is provided with a cooling arrangement 12 common to the boiler system 200 and the internal combustion engine 100. The cooling arrangement 12 comprises a cooling fluid circuit 20 provided for performing required heat transfer operations in the combined cycle power plant 10. The cooling arrangement 12 is provided with a first heat transfer arrangement 14, which is adapted to cool the fluid in the cooling fluid circuit 20. The first heat transfer arrangement 14 may be realized in various manners as long as it may extract heat from the cooling fluid in such a manner that no mass transfer of the cooling fluid to the atmosphere will take place. Preferably the first heat transfer arrangement 14 is a so called radiator in which the cooling fluid is cooled by transferring heat to the surrounding air. The cooling liquid is led to the first heat transfer arrangement 14 at its highest temperature in the circuit 20 and is cooled down to the lowest temperature. The circulation of the cooling liquid is maintained by means of a pump 17, 19 or alike.

In the embodiment of figure 1, next in the cooling fluid circuit, the cooling arrangement 12 comprises, downstream from the first heat transfer arrangement 14, a second heat transfer arrangement 16 for receiving heat from the engine. The second heat transfer arrangement 16 is preferably arranged in connection with the lower temperature level heat transfer arrangement 104 of the engine, cooling the combustion air of the engine 100 by transferring heat from the combustion air of the engine to the cooling fluid in the cooling fluid circuit 20. In the figure 1 there is shown an engine driven pump 19 to facilitate the fluid flow through the second heat transfer arrangement 16. The second heat transfer arrangement 16 is provided with a by-pass 21 with a pump 17 by means of which adequate cooling fluid flow to the next heat transfer arrangement in the circuit 20 is secured. This way also the maximized cooling capacity for the condenser heat transfer arrangement 206 may be secured, if so desired.

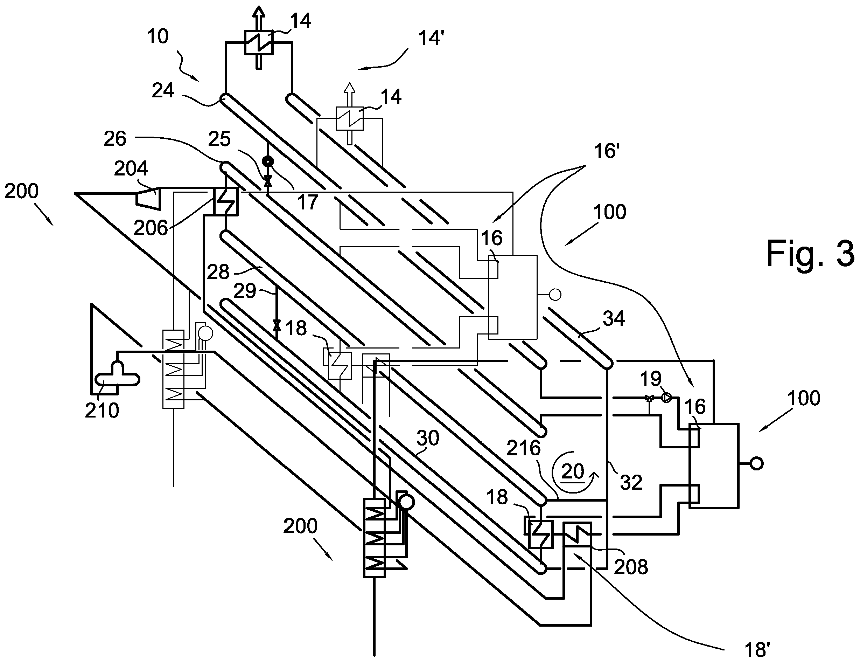

After the second heat transfer arrangement 16 there is the condenser heat transfer arrangement 206 of the boiler system 200 arranged in the circuit 20. So, the by-pass 21 facilitates the guiding of at least part of the cooling fluid directly from the first heat transfer arrangement to the condenser heat transfer arrangement 206. At this stage of the circuit 20 the cooling fluid receives heat from the steam condensing in the condenser heat transfer arrangement 206. Additionally there is arranged a by-pass channel 216 in the cooling fluid circuit 20 connecting the circuit after the condenser heat transfer arrangement 206 to the return line 32. This way it is secured that adequate flow of the cooling fluid at desired temperature through the condenser heat transfer arrangement 206 may be is maintained in all circumstances. This provides also increased flexibility in installations having more than one engine, as is shown in figure 3.

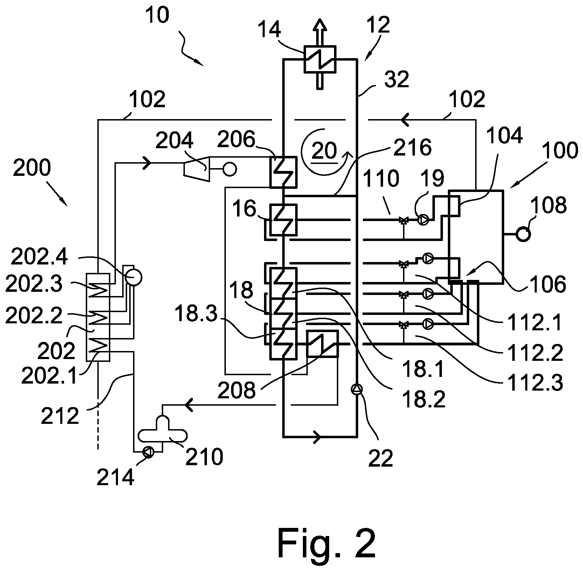

The further heated cooling fluid is next led to a third heat transfer arrangement 18 arranged in the circuit 20. The third heat transfer arrangement 18 is arranged to transfer heat from the engine, particularly from the lubrication system, engine jacket and combustion air, to the cooling fluid. In the figure 1 the third heat transfer arrangement 18 comprises advantageously three separate heat transfer units 18.1, 18.2, 18.3 as is depicted figure 2 and described below referring to figure 2.As is apparent from the description above in the embodiment of figure 1 the second heat transfer arrangement 16, the condenser heat transfer arrangement and the third heat transfer arrangement 18 are connected in series in the circuit such that the condenser heat transfer arrangement 206 is between the second heat transfer arrangement 16 and the third heat transfer arrangement 18. As an advantageous practical application the second heat transfer arrangement 16 is a low temperature level combustion air cooler and the third heat transfer arrangement is a high temperature level combustion air cooler.

In the embodiment of the figure 1 there is also a pre-heater heat transfer arrangement 208 operating as the condensate pre-heater 208. The pre-heater heat transfer arrangement 208 is at its second side connected to the boiler system 200 downstream the condenser heat transfer arrangement 206 to transfer heat from the cooling fluid of the engine to the condensate thus pre-heating the condensate. The pre-heater heat transfer arrangement 208 is here connected to higher temperature level heat transfer arrangement 106 adapted to cool the lubrication oil, engine jacket and/or also the combustion air. Thus, the condensate preheater 208 may utilize heat from high temperature combustion air cooler and lubrication oil cooling circuit of the engine.

The common cooling fluid circuit 20 is thus provided with heat transfer arrangements cooling the engine 100 and condensing the steam of the boiler system. The first heat transfer arrangement 14, the second heat transfer arrangement 16, the condenser heat transfer arrangement 206 and the third heat transfer arrangement 18 are all connected in series in the cooling fluid circuit 20. Additionally, the cooling fluid circuit 20 of the heat transfer arrangement 10 is a closed circuit. It should be noted that in the embodiment illustrated in figure 1 the third heat transfer arrangement 18 stands for one or more heat exchangers transferring heat from or to the engine which may be specified case by case. The ways of connecting such heat exchangers of the engine in heat transfer communication with the common fluid circuit 20 may be selected according to a specific application and are apparent to those skilled in the art.

Figure 1 illustrates also a temperature control system 110 in the second heat transfer arrangement 16 provided to control the heat transfer rate of the second heat transfer arrangement 16 from the combustion air to the cooling fluid. The control system 110 comprises a pump 19 supplying the cooling fluid to the second heat transfer arrangement 16 from the circuit 20. In the channel returning the cooling fluid back to the circuit 20 there is a by-pass 23 arranged, by mean of which by-pass a controlled flow rate of cooling fluid may be returned back to the second heat transfer arrangement 16. This also makes it possible to effect on the temperature of the cooling fluid entering the condenser heat transfer arrangement 206 such that its operation may be better optimized.

There is also a temperature control system 112 in the third heat transfer arrangement 18 provided to control e.g. the heat transfer rate from the combustion air, lubrication oil and engine to the cooling fluid. The control systems 110,112 are here shown only for illustrative purposes and their actual implementation may different in different applications.

In figure 2 there is shown another embodiment of the invention. It and its operation differfrom that shown in figure 1 by following features. In this embodiment the condenser heat transfer arrangement 206 is arranged in the circuit 20 between the first heat transfer arrangement 14 and the second heat transfer arrangement 16. This way the cooling fluid is guided directly from the first heat transfer arrangement 14 to the condenser heat transfer arrangement 206. The second heat transfer arrangement 16 comprises an optional intermediate circuit so that the cooling fluid circuit 20 is physically separated from the engine. It is also shown here how the third heat transfer arrangement 18 comprises separate heat transfer arrangements for lubrication oil, combustion air and engine cooling i.e. lubrication oil heat transfer unit 18.1, combustion air heat transfer unit 18.2 and an engine jacket heat transfer unit 18.3 connected in series in the cooling fluid circuit 20. The circulation of the cooling liquid is maintained by means of a pump 22 or alike. There is also a temperature control system 112.1, 112.2, 112.3 to independently control the heat transfer rate from the combustion air, lubrication oil and engine to the cooling fluid. The temperature control systems are here shown only for illustrative purposes and their actual implementation may different in different applications.

Figure 3 illustrates a further embodiment of the invention in which a number of engines 100 are connected to a boiler system 200. In this embodiment the cooling arrangement 10 comprises a set of first heat transfer arrangements 14'. In the set of the first heat transfer arrangements 14 there are more than one first heat transfer arrangements 14 connected in parallel with each other. The actual number of the first heat transfer arrangements in use is selected e.g. based on required cooling capacity. Only two units are shown here for clarity reasons.

The arrangement further comprises a set of second heat transfer arrangements 16' comprising more than one second heat transfer arrangements 16 also connected in parallel with each other. Each of the second heat transfer arrangements 16 is preferably arranged to receive heat from separate engine 100. Thus the number of the second heat transfer arrangements corresponds to the number of engines coupled to the cooling arrangement. The second heat transfer arrangement 16 may be realized according to a specific application and are apparent to those skilled in the art. Additionally the arrangement comprises a set of third heat transfer arrangements 18' comprising more than one third heat transfer arrangements 18 connected in parallel with each other. Correspondingly each of the third heat transfer arrangements 18 is arranged to receive heat from a separate engine 100 and the number of the third heat transfer arrangements 18 corresponds to the number of engines coupled to the cooling arrangement. For clarity reason there are only two engines 100 and respective heat transfer arrangements 16, 18 shown in the figure 3.

There is a first manifold 24 provided in the arrangement connecting the set of first heat transfer arrangements 14' to the set of second heat transfer unit 16'. The set of second heat transfer unit 16' is arranged between the first 24 and the second manifold 26. In operation of the cooling arrangement a first selected number of the first heat transfer arrangements 14 may be operated and a second selected number of the second heat transfer arrangements 16 may be operated. In practice the first manifold makes it possible to select the number of the first heat transfer arrangements in operation independently from engines in operation. Also, for example all of the first heat transfer arrangements may be in use regardless of the number of engines running, if desired. In practice the total heat transfer power of the first heat transfer arrangements 14 has to be greater than the total heat transfer power of the second heat transfer arrangements 16 in order to achieve sufficient cooling for all engines 100 and proper operation of the condenser heat transfer arrangement.

Cooling fluid is also subjected to mixing in the first manifold 24 which evens the temperature differences in the cooling fluid when flowing into the second selected number of the second heat transfer arrangements 16. Further, by means of the second manifold 26 the set of second heat transfer arrangements 16' is connected to the condenser heat transfer arrangement 206. So the condenser heat transfer arrangement 206 is arranged between the second 26 and the third manifold 28. Thus, the cooling fluid heated in the second selected number of the second heat transfer arrangements 16 may be led to the condenser heat transfer arrangement 206 via the manifold 26. In the figure 3, there is shown only one condenser heat transfer arrangement 206 in the boiler system, but the arrangement may be provided with several condenser heat transfer arrangements 206. Additionally, the arrangement comprises several boiler systems 200. Preferably each engine 100 is provided with a dedicated boiler system 200 which is arranged to provide steam to a common steam turbine - generator set 204.

The condenser heat transfer arrangement 206 is in turn connected via a third manifold 28 to the set of third heat transfer arrangement 18' so that so that cooling fluid heated in the condenser heat transfer arrangement may be led to the third selected number of the third heat transfer arrangements 18. Respectively the set of third heat transfer arrangement 18' is arranged between the third manifold 28 and the fourth manifold 30. The fourth manifold 30 in the cooling arrangement is arranged to collect the cooling fluid from the set of third heat transfer arrangement 18'. A return line 32 is arranged to connect the fourth manifold 30 to the fifth manifold 34 which closes the circuit being connected to inlets of the first heat transfer arrangements 14. There are also by-pass channels 25, 29, provided in the arrangement, between the manifolds 24, 26 and 28,30 respectively in order to control the cooling fluid flow in the arrangement. The by-pass channels are provided with means for controlling the fluid flow via the bypass channels. Preferably the means for controlling the fluid flow comprises a pump and/or a control valve

In order to set the first, second and the third selected number of heat transfer arrangement in operation the arrangement is provided with control means (not shown) in connection with each heat transfer arrangement. It should be noted that the embodiment shown in figure 3 may be modified to be coupled according any anyone of the embodiments described in figure1, figure2, figure 4 or figure 5.

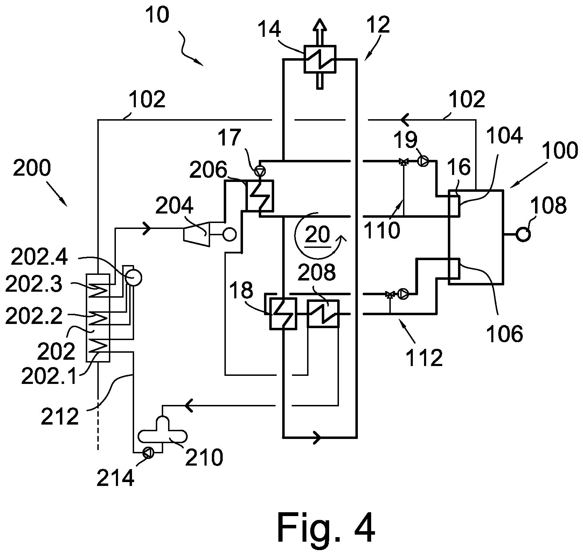

Figure 4 depicts schematically a combined cycle internal combustion piston engine power plant 10 similar to that in figure 1 except that the condenser heat transfer arrangement 206 is arranged to condense the steam in the boiler system and transfer heat to the cooling fluid in the cooling fluid circuit 20 arranged parallel with the second heat transfer arrangement 16.

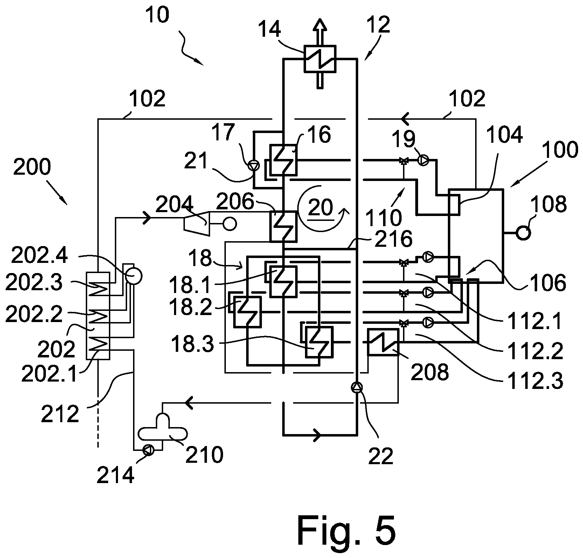

Figure 5 illustrates a further embodiment of the invention. The cooling arrangement 12 comprises a cooling fluid circuit 20 provided for performing required heat transfer operations in the combined cycle power plant 10. The cooling arrangement 12 is provided with a first heat transfer arrangement 14, which is adapted to cool the fluid in the cooling fluid circuit 20. Preferably the first heat transfer arrangement 14 is a so called radiator in which the cooling fluid is cooled by transferring heat to the surrounding air without mass transfer. The cooling liquid is led to the first heat transfer arrangement 14 at its highest temperature in the circuit 20 and is cooled down to the lowest temperature. The circulation of the cooling liquid is maintained by means of a pump 17, 22 or alike.

In the embodiment of figure 5, next in the cooling fluid circuit, the cooling arrangement 12 comprises, downstream from the first heat transfer arrangement 14, a second heat transfer arrangement 16 for receiving heat from the engine. The second heat transfer arrangement 16 is preferably arranged in connection with the lower temperature level heat transfer arrangement 104 of the engine cooling the combustion air of the engine 100 by transferring heat from the combustion air of the engine to the cooling fluid in the cooling fluid circuit 20. In the figure 5 there is shown an engine driven pump 19 to facilitate the fluid flow through the second heat transfer arrangement 16. The second heat transfer arrangement 16 is provided with a by-pass 21 with a pump 17 by means of which appropriate fluid flow to the next heat transfer arrangement in the circuit 20 is secured.

After the second heat transfer arrangement 16 there is the condenser heat transfer arrangement 206 of the boiler system 200 arranged in the circuit 20. At this stage of the circuit 20 the cooling fluid receives heat from the steam condensing in the condenser heat transfer arrangement 206. Due to the by-pass 21 it is ensured that the operation of the condenser heat transfer arrangement 206 is efficient.

The further heated cooling fluid is next led to a third heat transfer arrangement 18 arranged in the circuit 20. The third heat transfer arrangement 18 is arranged to transfer heat from the engine, particularly from the lubrication system, engine jacket and combustion air, to the cooling fluid. In the figure 5 the third heat transfer arrangement 18 comprises three separate heat transfer units 18.1, 18.2, 18.3 connected parallel to each other. In the embodiment of the figure 5 there is also a pre-heater heat transfer arrangement 208 operating as the condensate preheater 208. The pre-heater heat transfer arrangement 208 is at its second side connected to the boiler system 200 downstream the condenser heat transfer arrangement 206 to transfer heat from the cooling fluid of the engine to the condensate thus pre-heating the condensate. The pre-heater heat transfer arrangement 208 is here connected to higher temperature level heat transfer arrangement 106 adapted to cool the lubrication oil, engine jacket and/or also the combustion air. Thus, the condensate preheater 208 may utilize heat from high temperature combustion air cooler and lubrication oil cooling circuit of the engine. Advantageously the pre-heater heat transfer arrangement 208 is connected to engine jacket heat transfer unit 18.3 of the engine. Thus, the condensate preheater 208 may utilize heat from cooling circuit of the engine jacket.

The common cooling fluid circuit 20 is thus provided with heat transfer arrangements cooling the engine 100 and condensing the steam of the boiler system. The first heat transfer arrangement 14, the second heat transfer arrangement 16, the condenser heat transfer arrangement 206 and the third heat transfer arrangement 18 units are all connected in series in the cooling fluid circuit 20, while the third heat transfer arrangement 18 units are parallel to each other.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in connection with another embodiment when such a combination is technically feasible. Particularly the third heat transfer units in figure 2 may be connected parallel with each other and the third heat transfer units in figure 5 may be connected in series with each other.

## Claims

1. A cooling arrangement for a combined cycle internal combustion piston engine power plant (10) comprising at least one internal combustion piston engine (100) and a boiler system (200) comprising a turbine-generator set, which cooling arrangement comprises a cooling fluid circuit (20) provided with a first heat transfer arrangement (14) for cooling the fluid in the cooling fluid circuit, and a second heat transfer arrangement (16) for receiving heat from the engine, a condenser heat transfer arrangement (206) for condensing the steam in the boiler system and a third heat transfer arrangement (18) for receiving heat from the engine, **characterized in that** the first heat transfer arrangement (14) is arranged to transfer heat from the cooling fluid to the air surrounding the arrangement without mass transfer to the air and that in the cooling fluid circuit (20) the first heat transfer arrangement (14), the second heat transfer arrangement (16), the condenser heat transfer arrangement (206) and the third heat transfer arrangement (18) are all connected in series.

2. A cooling arrangement according to claim 1, **characterized in that** the cooling fluid circuit (20) of the heat transfer arrangement is a closed circuit.

3. A cooling arrangement according to claim 1, **characterized in that** the second heat transfer arrangement (16) is arranged to transfer heat from the combustion air of the engine to the cooling fluid in the cooling fluid circuit (20).

4. A cooling arrangement according to claim 1 or 3, **characterized in that** the condenser heat transfer arrangement (206) is arranged to condense the steam in the boiler system and transfer heat to the cooling fluid in the cooling fluid circuit (20), the condenser heat transfer arrangement (206) being arranged downstream the second heat transfer arrangement (16).

5. A cooling arrangement according to claim 1 or 3, **characterized in that** the condenser heat transfer arrangement (206) is arranged to condense the steam in the boiler system (200) and transfer heat to the cooling fluid in the cooling fluid circuit (20), the condenser heat transfer arrangement (206) being arranged between the first (14) and the second heat transfer arrangement (16) in the circuit (20).

6. A cooling arrangement according to claim 1, **characterized in that** the third heat transfer arrangement (18) comprises lubrication oil heat transfer unit, combustion air heat transfer unit and an engine jacket heat transfer unit connected in series in the cooling fluid circuit (20).

7. A cooling arrangement according to claim 1, **characterized in that** the third heat transfer arrangement (18) comprises lubrication oil heat transfer unit, combustion air heat transfer unit and an engine jacket heat transfer unit connected parallel to the cooling fluid circuit (20).

8. A cooling arrangement according to claim 1, **characterized in that** the cooling arrangement comprises a pre-heater heat transfer arrangement (208) connected at its second side to the boiler system (200), downstream the condenser heat transfer arrangement (206) to transfer heat from the engine to the condensate thus pre-heating the condensate.

9. A cooling arrangement according to claim 8, **characterized in that** the preheater heat transfer arrangement (208) is arranged to transfer heat from the engine jacket to the condensate by an engine jacket heat transfer unit (18.3).

10. A cooling arrangement according to claim 1, **characterized in that** the arrangement comprises a set of first heat transfer arrangements (14') comprising more than one first heat transfer arrangements (14) connected in parallel with each other.

11. A cooling arrangement according to claim 10, **characterized in that** the arrangement comprises a set of second heat transfer arrangements (16') comprising more than one second heat transfer arrangements connected in parallel with each other, each of the second heat transfer arrangements (16) arranged to receive heat from separate engine, and that the arrangement comprises a set of third heat transfer arrangements (18) comprising more than one third heat transfer arrangements connected in parallel, each of the third heat transfer arrangements arranged to receive heat from a separate engine.

12. A cooling arrangement according to claim 11, **characterized in that** the set of first heat transfer arrangements (14') is connected via a first manifold (24) to the set of second heat transfer units (16') so that a first selected number of the first heat transfer arrangements (14) may be operated and a second selected number of the second heat transfer arrangements (16) may be operated.

13. A cooling arrangement according to claim 11, **characterized in that** the set of second heat transfer arrangements (16') is connected to the condenser heat transfer arrangement (206) via a second manifold (26) so that cooling fluid heated in the second selected number of the second heat transfer arrangements may led to the condenser heat transfer arrangement.

14. A cooling arrangement according to claim 13, **characterized in that** the condenser heat transfer arrangement is connected via a third manifold (28) to the set of third heat transfer arrangements so that so that cooling fluid heated in the condenser heat transfer arrangement may be led to the third selected number of the third heat transfer arrangements.

## Patentansprüche

1. Kühlanordnung für ein Verbrennungskolben-Verbrennungsmotor-Kombikraftwerk (10) umfassend mindestens einen Verbrennungskolbenmotor (100) und ein Kesselsystem (200) umfassend einen Turbinengeneratorsatz, wobei die Kühlanordnung einen Kühlfluidkreislauf (20) umfasst, der mit einer ersten Wärmeübertragungsanordnung (14) zum Kühlen des Fluids in dem Kühlfluidkreislauf und einer zweiten Wärmeübertragungsanordnung (16) zum Aufnehmen von Wärme vom Motor, einer Kondensator-Wärmeübertragungsanordnung (206) zum Kondensieren des Dampfes in dem Kesselsystem und einer dritten Wärmeübertragungsanordnung (18) zum Aufnehmen von Wärme vom Motor versehen ist, **dadurch gekennzeichnet, dass** die erste Wärmeübertragungsanordnung (14) ausgelegt ist, Wärme von dem Kühlfluid zu der die Anordnung umgebenden Luft ohne Massentransfer auf die Luft zu übertragen, und dass in dem Kühlfluidkreislauf (20) die erste Wärmeübertragungsanordnung (14), die zweite Wärmeübertragungsanordnung (16), die Kondensator-Wärmeübertragungsanordnung (206) und die dritte Wärmeübertragungsanordnung (18) alle in Reihe verbunden sind.

2. Kühlanordnung nach Anspruch 1, **dadurch gekennzeichnet, dass** der Kühlfluidkreislauf (20) der Wärmeübertragungsanordnung ein geschlossener Kreislauf ist.

3. Kühlanordnung nach Anspruch 1, **dadurch gekennzeichnet, dass** die zweite Wärmeübertragungsanordnung (16) ausgelegt ist, Wärme aus der Verbrennungsluft des Motors zu dem Kühlfluid in dem Kühlfluidkreislauf (20) zu übertragen.

4. Kühlanordnung nach Anspruch 1 oder 3, **dadurch gekennzeichnet, dass** die Kondensator-Wärmeübertragungsanordnung (206) ausgelegt ist, den Dampf in dem Kesselsystem zu kondensieren und Wärme an das Kühlfluid in dem Kühlfluidkreislauf (20) zu übertragen, wobei die Kondensator-Wärmeübertragungsanordnung (206) der zweiten Wärmeübertragungsanordnung (16) nachgeschaltet angeordnet ist.

5. Kühlanordnung nach Anspruch 1 oder 3, **dadurch gekennzeichnet, dass** die Kondensator-Wärmeübertragungsanordnung (206) ausgelegt ist, den Dampf in dem Kesselsystem (200) zu kondensieren und Wärme an das Kühlfluid im Kühlfluidkreislauf (20) zu übertragen, wobei die Kondensator-Wärmeübertragungsanordnung (206) zwischen der ersten (14) und der zweiten Wärmeübertragungsanordnung (16) in dem Kreislauf (20) angeordnet ist.

6. Kühlanordnung nach Anspruch 1, **dadurch gekennzeichnet, dass** die dritte Wärmeübertragungsanordnung (18) eine Schmieröl-Wärmeübertragungseinheit, eine Verbrennungsluft-Wärmeübertragungseinheit und eine Motormantel-Wärmeübertragungseinheit umfasst, die in dem Kühlfluidkreislauf (20) in Reihe verbunden sind.

7. Kühlanordnung nach Anspruch 1, **dadurch gekennzeichnet, dass** die dritte Wärmeübertragungsanordnung (18) eine Schmieröl-Wärmeübertragungseinheit, eine Verbrennungsluft-Wärmeübertragungseinheit und eine Motormantel-Wärmeübertragungseinheit umfasst, die parallel zu dem Kühlfluidkreislauf (20) verbunden ist.

8. Kühlanordnung nach Anspruch 1, **dadurch gekennzeichnet, dass** die Kühlanordnung eine Vorwärmer-Wärmeübertragungsanordnung (208) umfasst, die an ihrer zweiten Seite mit dem Kesselsystem (200) stromabwärts der Kondensator-Wärmeübertragungsanordnung (206) verbunden ist, um Wärme vom Motor auf das Kondensat zu übertragen, sodass das Kondensat vorgewärmt wird.

9. Kühlanordnung nach Anspruch 8, **dadurch gekennzeichnet, dass** die Vorwärmer-Wärmeübertragungsanordnung (208) ausgelegt ist, Wärme durch eine Motormantel-Wärmeübertragungseinheit (18.3) von dem Motormantel zu dem Kondensat zu übertragen.

10. Kühlanordnung nach Anspruch 1, **dadurch gekennzeichnet, dass** die Anordnung einen Satz von ersten Wärmeübertragungsanordnungen (14') umfassend mehr als eine erste Wärmeübertragungsanordnung (14) umfasst, die parallel miteinander verbunden sind.

11. Kühlanordnung nach Anspruch 10, **dadurch gekennzeichnet, dass** die Anordnung einen Satz von zweiten Wärmeübertragungsanordnungen (16') umfasst, die mehr als eine zweite Wärmeübertragungsanordnung umfassen, die parallel miteinander verbunden sind, wobei jede der zweiten Wärmeübertragungsanordnungen (16) ausgelegt ist, Wärme von einem separaten Motor aufzunehmen, und dass die Anordnung einen Satz von dritten Wärmeübertragungsanordnungen (18) umfasst, die mehr als eine dritte parallel verbundene Wärmeübertragungsanordnung umfassen, wobei jede der dritten Wärmeübertragungsanordnungen ausgelegt ist, Wärme von einem separaten Motor aufzunehmen.

12. Kühlanordnung nach Anspruch 11, **dadurch gekennzeichnet, dass** der Satz erster Wärmeübertragungsanordnungen (14') über einen ersten Verteiler (24) mit dem Satz zweiter Wärmeübertragungseinheiten (16') verbunden ist, sodass eine erste ausgewählte Anzahl der ersten Wärmeübertragungsanordnungen (14) betrieben werden kann und eine zweite ausgewählte Anzahl der zweiten Wärmeübertragungsanordnungen (16) betrieben werden kann.

13. Kühlanordnung nach Anspruch 11, **dadurch gekennzeichnet, dass** der Satz zweiter Wärmeübertragungsanordnungen (16') über einen zweiten Verteiler (26) mit der Kondensator-Wärmeübertragungsanordnung (206) verbunden ist, sodass Kühlfluid, das in der zweiten ausgewählten Anzahl der zweiten Wärmeübertragungsanordnungen erwärmt wird, zu der Kondensator-Wärmeübertragungsanordnung geleitet werden kann.

14. Kühlanordnung nach Anspruch 13, **dadurch gekennzeichnet, dass** die Kondensator-Wärmeübertragungsanordnung über einen dritten Verteiler (28) mit dem Satz von dritten Wärmeübertragungsanordnungen verbunden ist, sodass Kühlfluid, das in der Kondensator-Wärmeübertragungsvorrichtung erwärmt wird, zu der dritten ausgewählten Anzahl der dritten Wärmeübertragungsanordnungen geleitet werden kann.

## Revendications

1. Dispositif de refroidissement pour un groupe moteur utilisant des moteurs à piston à combustion interne à cycle combiné (10) comprenant au moins un moteur à piston à combustion interne (100) et un système de chaudière (200) comprenant un ensemble turbogénérateur, ledit dispositif de refroidissement comprenant un circuit de fluide de refroidissement (20) doté d'un premier dispositif de transfert de chaleur (14) destiné à refroidir le fluide dans le circuit de fluide de refroidissement, et d'un deuxième dispositif de transfert de chaleur (16) destiné à recevoir de la chaleur en provenance du moteur, un dispositif de transfert de chaleur de condensateur (206) destiné à condenser la vapeur dans le système de chaudière et un troisième dispositif de transfert de chaleur (18) destiné à recevoir de la chaleur en provenance du moteur, **caractérisé en ce que** le premier dispositif de transfert de chaleur (14) est conçu pour transférer de la chaleur du fluide de refroidissement vers l'air environnant le dispositif sans transfert de masse vers l'air et **en ce que** dans le circuit de fluide de refroidissement (20), le premier dispositif de transfert de chaleur (14), le deuxième dispositif de transfert de chaleur (16), le dispositif de transfert de chaleur de condensateur (206) et le troisième dispositif de transfert de chaleur (18) sont tous reliés en série.

2. Dispositif de refroidissement selon la revendication 1, **caractérisé en ce que** le circuit de fluide de refroidissement (20) du dispositif de transfert de chaleur est un circuit fermé.

3. Dispositif de refroidissement selon la revendication 1, **caractérisé en ce que** le deuxième dispositif de transfert de chaleur (16) est conçu pour transférer de la chaleur de l'air de combustion du moteur vers le fluide de refroidissement dans le circuit de fluide de refroidissement (20).

4. Dispositif de refroidissement selon la revendication 1 ou 3, **caractérisé en ce que** le dispositif de transfert de chaleur de condensateur (206) est conçu pour condenser la vapeur dans le système de chaudière et pour transférer de la chaleur vers le fluide de refroidissement dans le circuit de fluide de refroidissement (20), le dispositif de transfert de chaleur de condensateur (206) étant disposé en aval du deuxième dispositif de transfert de chaleur (16).

5. Dispositif de refroidissement selon la revendication 1 ou 3, **caractérisé en ce que** le dispositif de transfert de chaleur de condensateur (206) est conçu pour condenser la vapeur dans le système de chaudière (200) et pour transférer de la chaleur vers le fluide de refroidissement dans le circuit de fluide de refroidissement (20), le dispositif de transfert de chaleur de condensateur (206) étant disposé entre le premier (14) et le deuxième dispositif de transfert de chaleur (16) dans le circuit (20).

6. Dispositif de refroidissement selon la revendication 1, **caractérisé en ce que** le troisième dispositif de transfert de chaleur (18) comprend une unité de transfert de chaleur d'huile lubrifiante, une unité de transfert de chaleur d'air de combustion et une unité de transfert de chaleur de chemise de moteur reliées en série dans le circuit de fluide de refroidissement (20) .

7. Dispositif de refroidissement selon la revendication 1, **caractérisé en ce que** le troisième dispositif de transfert de chaleur (18) comprend une unité de transfert de chaleur d'huile lubrifiante, une unité de transfert de chaleur d'air de combustion et une unité de transfert de chaleur de chemise de moteur reliées en parallèle au circuit de fluide de refroidissement (20).

8. Dispositif de refroidissement selon la revendication 1, **caractérisé en ce que** le dispositif de refroidissement comprend un dispositif de transfert de chaleur de préchauffeur (208) relié au système de chaudière (200) par son deuxième côté, en aval du dispositif de transfert de chaleur de condensateur (206), pour transférer de la chaleur du moteur au condensat, préchauffant ainsi le condensat.

9. Dispositif de refroidissement selon la revendication 8, **caractérisé en ce que** le dispositif de transfert de chaleur de préchauffeur (208) est conçu pour transférer de la chaleur de la chemise de moteur vers le condensat à l'aide d'une unité de transfert de chaleur de chemise de moteur (18.3).

10. Dispositif de refroidissement selon la revendication 1, **caractérisé en ce que** le dispositif comprend un ensemble de premiers dispositifs de transfert de chaleur (14') comprenant plusieurs premiers dispositifs de transfert de chaleur (14) reliés en parallèle les uns aux autres.

11. Dispositif de refroidissement selon la revendication 10, **caractérisé en ce que** le dispositif comprend un ensemble de deuxièmes dispositifs de transfert de chaleur (16') comprenant plusieurs deuxièmes dispositifs de transfert de chaleur reliés en parallèle les uns aux autres, chacun des deuxièmes dispositifs de transfert de chaleur (16) étant conçu pour recevoir de la chaleur à partir de régions séparées, et **en ce que** le dispositif comprend un ensemble de troisièmes dispositifs de transfert de chaleur (18) comprenant plusieurs troisièmes dispositifs de transfert de chaleur reliés en parallèle, chacun des troisièmes dispositifs de transfert de chaleur étant conçu pour recevoir de la chaleur à partir d'une région séparée.

12. Dispositif de refroidissement selon la revendication 11, **caractérisé en ce que** l'ensemble de premiers dispositifs de transfert de chaleur (14') est relié à l'ensemble de deuxièmes dispositifs de transfert de chaleur (16') par le biais d'un premier collecteur (24), de manière à pouvoir commander un premier nombre sélectionné parmi les premiers dispositifs de transfert de chaleur (14) et un deuxième nombre sélectionné parmi les deuxièmes dispositifs de transfert de chaleur (16).

13. Dispositif de refroidissement selon la revendication 11, **caractérisé en ce que** l'ensemble de deuxièmes dispositifs de transfert de chaleur (16') est relié au dispositif de transfert de chaleur de condensateur (206) par le biais d'un deuxième collecteur (26) de manière à ce que du fluide de refroidissement chauffé dans le deuxième nombre sélectionné de deuxièmes dispositifs de transfert de chaleur puisse être guidé vers le dispositif de transfert de chaleur de condensateur.

14. Dispositif de refroidissement selon la revendication 13, **caractérisé en ce que** le dispositif de transfert de chaleur de condensateur est relié par le biais d'un troisième collecteur (28) à l'ensemble de troisièmes dispositifs de transfert de chaleur de manière à ce que du fluide de refroidissement chauffé dans le dispositif de transfert de chaleur de condensateur puisse être guidé vers le troisième nombre sélectionné des troisièmes dispositifs de transfert de chaleur.
